# EUROPÄISCHE PATENTANMELDUNG

(11) **EP 0 713 830 A1**
(43) Veröffentlichungstag der Anmeldung: **29.05.1996**
(21) Anmeldenummer: 95108871.5
(22) Anmeldetag: 08.06.1995
(51) Int. Cl.: B65B 21/04

(54) **Einrichtung zum Transportieren von mit einem unterhalb des Verschlusses angeordneten Kragen versehenen, kippgefährdeten Flaschen**

(30) Priorität: 24.11.1994 DE 4441700
(71) Anmelder: KISTERS MASCHINENBAU GMBH, D-47533 Kleve (DE)
(72) Erfinder: Marti, Jean, D-47533 Kleve (DE)
(74) Vertreter: Röther, Peter, Dipl.-Phys.

(57) **Zusammenfassung**

Bei einer Einrichtung zum Transportieren von mit einem unterhalb des Verschlusses angeordneten Kragen versehenen, kippgefährdeten Flaschen mit einer Abteilstation, in der mehrere derartige Flaschen zu einem Gebinde zusammengestellt werden, und einer Verpackungsstation, wobei zwischen diesen Stationen am Flaschenhals unterhalb des Kragens anliegende Führungen vorgesehen sind, ist erfindungsgemäß vorgesehen, daß die Führungen in Richtung Verpackungsstation nach anfänglich horizontalem Verlauf einen ansteigenden Bereich aufweisen, der in einen horizontalen Bereich übergeht, der wiederum in einen zur Verpackungsstation abfallenden Bereich übergeht, wodurch die Flaschenböden in Kontakt mit dem dort vorhandenen Verpackungsmaterial gelangen, wobei zur Fortbewegung der Flaschen in den Führungen Mitnehmerstäbe vorgesehen sind, die sich am Anfang der Führungen von hinten an die Flaschen anlegen und am Ende der Führungen von diesen nach oben weg bewegbar sind.

## Beschreibung

Die Erfindung betrifft eine Einrichtung zum Transportieren von mit einem unterhalb des Verschlusses angeordneten Kragen versehenen, kippgefährdeten Flaschen mit einer Abteilstation, in der mehrere derartiger Flaschen zu einem Gebinde zusammengestellt werden, und einer Verpackungsstation, wobei zwischen diesen Stationen am Flaschenhals unterhalb des Kragens anliegende Führungen vorgesehen sind.

Beim Verpacken von Massenprodukten, insbesondere in der Lebensmittel- und Getränkeindustrie, werden an die Verpackungsmaschinen immer höhere Anforderungen bezüglich Schnelligkeit und Zuverlässigkeit gestellt. Sei es, daß die Produkte, wie z.B. Dosen oder Flaschen, zu Gruppen zusammengefaßt vollautomatisch in Kartons, Tray-Verpackungen oder lediglich in Kunststoffolie verpackt werden. Typische Maschinengeschwindigkeiten liegen heute im Bereich von 100 Packungen pro Minute. Jede Störung des Ablaufs bedeutet Maschinenausfall und somit einen erheblichen Produktionsausfall.

Eine derartige Betriebsstörung ergibt sich oft durch das zu verpackende Produkt selbst. Gerade bei Gegenständen, deren Höhendimension signifikant größer ist als Breite und Länge, die also einen relativ hoch angeordneten Schwerpunkt besitzen, ist die Gefahr besonders groß, daß z.B. beim Beschleunigen oder Abbremsen der Maschine oder beim Übergang von einem Transportband auf das nächste einer oder auch mehrere dieser Gegenstände umfallen, was in der Regel zu einer Kettenreaktion führt. Die Folge, die Maschine muß stillgesetzt werden, die Gegenstände mühsam wieder aufgerichtet und erneut gestartet werden.

Es ist aus der DE-OS 42 07 725 eine Einrichtung der obengenannten Art bekannt, bei der die Flaschen von der Abteilstation zur Verpackungsstation über ein Band transportiert werden, wobei das Umfallen der Flaschen dadurch verhindert wird, daß sich vor und hinter einer Reihe quer zueinander angeordneter Flaschen Abstützstäbe legen, die in Zusammenwirken mit den Hals der Flasche führenden Schienen ein Umfallen der Flaschen beim Transport verhindern. Die Abstützstäbe bleiben dabei so lange in Anlage, bis die jeweilige Flaschengruppe von einer Folie umhüllt ist, wobei naturgemäß die Stäbe zunächst mitumwickelt werden. Danach fahren die Stäbe seitlich aus der Umhüllung heraus und werden seitlich neben der Transportlinie wieder zurück zur Abteilstation gefahren. Mit Hilfe dieser vorbekannten Vorrichtung ist es somit lediglich möglich, Flaschen in einer um sie herum geschlungenen Folie zu verpacken, während sogenannte Tray-Verpackungen in dieser Vorrichtung nicht möglich sind. Darüber hinaus ist die vorbekannte Vorrichtung in erster Linie dazu geeignet, lediglich Gebinde zu bewegen und zu verpacken, die aus einer Reihe nebeneinander angeordneter Flaschen bestehen.

Der Erfindung liegt daher die Aufgabe zugrunde, eine Einrichtung der eingangs genannten Art so auszugestalten, daß Gebinde aus mehreren Reihen nebeneinander angeordneter Flaschen beispielsweise Sechser-, Achter- oder auch Zwölferpacks, sturzfei von der Abteilstation zur jeweiligen Verpackungsstation transportieren werden können, wobei es gleichgültig ist, ob die Gebinde auf Trays bzw. auf Platten gestellt und/oder folienumwickelt werden.

Die Erfindung löst diese Aufgabe mit Hilfe der Merkmale des kennzeichnenden Teils des Anspruchs 1. Weitere vorteilhafte Ausgestaltungen der Erfindung sind Gegenstand der Unteransprüche.

Nachdem die entsprechende Anzahl von zu einer Gruppe zusammengestellten Flaschen aus der Abteilstation auf einem Band weitertransportiert worden sind, gelangen die Flaschen mit ihrem Halsbereich in die ihnen zugeordneten Führungen derart, daß sich beiderseits des Halses eine Führungsschiene unter dem überstehenden Kragen befindet. Befindet sich ein vollständiges Gebinde in den Führungen, wobei die Vorwärtsbewegung noch durch das Transportband erfolgt, legt sich von oben hinten ein Mitnehmerstab an die hintere Flaschenreihe. Dabei ist die Geschwindigkeit des von oben hinten kommenden Stabes etwas größer als die Transportgeschwindigkeit des Bandes. Hierdurch schiebt der Mitnehmerstab das gesamte Gebinde in den Führungen weiter, die an diesem Punkt schräg nach oben ansteigen, so daß die Flaschen den Kontakt zum Transportband verlieren. Im weiteren Verlauf werden die Flaschen mit Hilfe des Mitnehmerstabes im horizontalen Bereich der Führungen weitertransportiert und gelangen so in den Bereich der Verpackungsstation. In diesem Bereich verlaufen die Führungen wieder schräg nach unten, so daß die Flaschen in Kontakt mit dem dort befindlichen Verpackungsmaterial gelangen. Durch diese Maßnahmen sind zum einen die Flaschen gegen Umstürzen gesichert, da sie frei an ihren Kragen aufgehängt sind. Zumindest ist im Gegensatz zum oben diskutierten Stand der Technik ein zusätzliches Förderband nicht notwendig, da die Mitnehmerstäbe den Vorschub bewirken. Im Gegensatz dazu war es im Stand der Technik erforderlich, Führungsschienen, Abstützstäbe und ein Transportband vorzusehen.

Die Verpackungsstation kann gemäß den Ansprüchen 2 und 3 lediglich aus einer Faltstation bestehen, in der von der Unterseite der Maschine ebene Tray-Zuschnitte angeliefert werden, auf die das Gebinde mittels der abfallenden Führungen aufgesetzt werden derart, daß die Kragenunterseiten den Kontakt zu den Führungen verlieren. Während des Faltvorganges wird Tray und darauf stehendes Gebinde mit einer Transportgeschwindigkeit weitertransportiert, die gleich ist der Geschwindigkeit der Mitnehmerstäbe. Dadurch, daß die Kragen nun frei liegen, ist eine durch Reibung verursachte Verkantung in diesem Bereich ausgeschlossen. Das fertig im Tray verpackte Gebinde wird dann entweder so wie es ist zu einer Palletierstation befördert oder aber es gelangt - wie durch die zweite Alternative des Anspruchs 2 vorgegeben - in eine sogenannte Einschlagstation, in der ebenfalls von unten ein Kunststoffolienabschnitt in die Transportebene gefördert wird, dessen vorderes Ende vom Tray überfahren wird und dessen hinteres Ende mit Hilfe eines Einschlagstabes über das gesamte Gebinde hinweg gelegt wird und ebenfalls von dem Tray überfahren wird. Ein derartig verpacktes Gebinde gelangt dann in einen Schrumpftunnel, in dem die Folie um das gesamte Gebinde herumgeschrumpft wird, wonach es zur Palletierstation befördert wird.

Eine weitere Alternative, die durch den Anspruch 2 vorgegeben ist, besteht darin, daß die in den Führungen hängenden Flaschen über die Faltstation hinweg bewegt werden und erst in der Einschlagstation auf ein vorgeschaltetes Band abgesetzt werden, dessen Geschwindigkeit ebenfalls gleich ist der Geschwindigkeit der Mitnehmerstäbe, worauf dann das abgesetzte Gebinde vom Band auf den angeförderten Folienabschnitt transportiert wird. Der Einschlagvorgang erfolgt entsprechend der obigen Beschreibung.

Eine weitere Möglichkeit der Verpackung besteht darin, daß die in den Führungen hängenden Flaschen statt auf einen Tray-Zuschnitt auf eine einfache Platte (Karton) abgesetzt werden, die dann mit den darauf stehenden Flaschen weiter zur Einschlagstation befördert wird, wobei bis zur Einschlagstation die Kragen der Flaschen ebenfalls von den Führungen abgehoben sind.

Gemäß Vorschlag des Anspruchs 5 sind die Führungen in ihrer Höhe über der Transportebene einstellbar, damit die Maschine schnell und einfach an verschiedene Flaschenhöhen angepaßt werden kann.

Gemäß Anspruch 6 ist auch der seitliche Abstand der Führungen zueinander verstellbar, damit die Maschine an verschiedene Flaschendurchmesser angepaßt werden kann.

Der Anspruch 7 schlägt vor, daß die Höhenverstellbarkeit der Führungen mit der Höhenverstellbarkeit der Mitnehmerstäbe synchronisiert ist. Das wird technisch so gelöst, daß die endlose/endlosen Kette/Ketten, an denen die Mitnehmerstäbe befestigt sind, am gleichen Rahmen angeordnet sind, wie die die Führungen haltenden Traversen, so daß durch einfache Verstellung des Rahmens in vertikaler Richtung sowohl die Führungen als auch die Mitnehmerstäbe in ihrem Abstand zur Transportebene verändert werden können.

Eine besonders einfache und vorteilhafte Ausführungsform der Führungen ergibt sich aus dem Merkmal des Anspruchs 8. Es handelt sich dabei um einfache Profile, die an die eben beschriebenen Traversen beispielsweise angeschraubt werden, wobei die U-Schenkel nach unten weisen und in ihrem Endbereich aufeinander zugebogen sind, so daß die aufeinander zugebogenen Enden einen Abstand voneinander haben, der etwas größer ist als der Durchmesser des Flaschenhalses aber kleiner als der Durchmesser des Kragens.

Bei Bedarf können die Schienen durch andere in ihrer Öffnungsweite unterschiedliche Führungsschienen ausgetauscht werden.

Die Erfindung wird im folgenden anhand von Zeichnungen dargestellt und näher erläutert.

Es zeigen:
- Fig.: 1: den erfindungsgemäßen Teil einer Verpackungsmaschine in Seitenansicht,
- Fig.: 2: eine erfindungsgemäße Einrichtung teilweise im Schnitt im Bereich der Faltstation, und zwar in Transportrichtung gesehen.

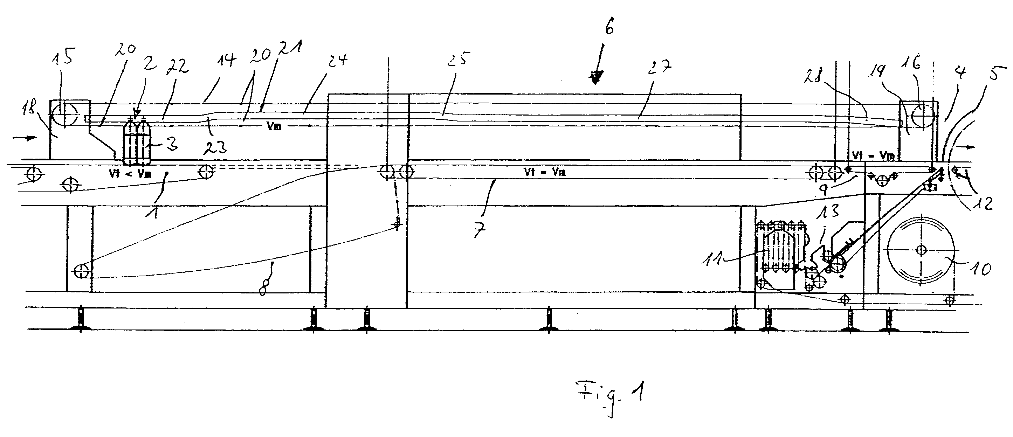

In der Fig. 1 ist ein Teil einer Verpackungsmaschine dargestellt, der in teilweise schematisierter Form den Bereich von einem von einer Abteilstation ankommenden Zufuhrband 1 mit darauf antransportierten bereits zu Gebinden 2 zusammengestellten Flaschen 3 bis zum Übergabepunkt 4 zu einer Einschlagstation 5 zeigt.

Zwischen dem Zufuhrband 1 und der Einschlagstation 5 ist schematisch eine Faltstation 6 dargestellt, von der lediglich das Transportband 7 gezeigt ist. Vor dem Transportband 7 mündet die Zufuhrvorrichtung für Kartonzuschnitte, wie sogenannte Trays oder einfache Kartonplatten. Die Zufuhrvorrichtung ist aus Übersichtlichkeitsgründen lediglich durch die Transportkette 8 angedeutet, die die Zuschnitte aus einem Zuschnittmagazin schräg nach oben in die Faltstation 6 fördert.

Am anderen Ende des Transportbandes 7 schließt sich ein weiteres Förderband 9 an, welches unmittelbar vor der Einschlagstation 5 endet.

Unterhalb des Förderbandes 9 befindet sich eine Einrichtung für die Zufuhr von Folienabschnitten in die Einschlagstation. Hierbei wird Folie von einer Rolle 10 abgewickelt, durch einen Tänzer 11 geführt und von dort schräg nach oben zwischen Förderband 9 und Einschlagstation 5 hindurch auf das sich dort anschließende Band 12, das nur noch teilweise dargestellt ist. Zwischen Tänzer 11 und Transportebene befindet sich eine Schneidvorrichtung 13, die die Folie in Abschnitte unterteilt. Der Anfang des Folienabschnitts wird, wenn er auf dem Band 12 aufliegt, von der zu umwickelnden Produktgruppe überfahren. Ein umlaufender Stab (nicht dargestellt) unterfährt den noch unterhalb der Transportebene befindlichen Teil des Folienabschnitts und legt ihn durch den Spalt zwischen Förderband 9 und Einschlagstation 5 hindurch nach oben um die Produktgruppe herum, bis er hinter dem Band 12 unter die Transportebene herabhängt. Die auf das Band 12 weiter beförderte Produktgruppe überfährt auch dieses Ende des Folienabschnittes, so daß die Produktgruppe vollständig umhüllt ist.

Oberhalb der Transportebene ist eine endlos umlaufende Kette 14 angeordnet, die im vorliegenden Beispiel in ihren Umlenkbereichen 15 und 16 an am Maschinenrahmen 17 angeordneten Konsolen 18 und 19 gelagert ist. Obwohl nur eine Kette 14 dargestellt ist, versteht es sich von selbst, daß beidseitig der Transportstrecke je eine solche Kette vorgesehen sein kann. In definierten Abständen zueinander sind an der/den Kette(n) Mitnehmerstäbe 20 quer zur Transportrichtung befestigt. Die sich jeweils im Untertrum der Kette 14 befindenden Mitnehmerstäbe 20 liegen in einer derartigen Höhe über der Transportebene, daß sie die in der Gruppe hinteren Flaschen 3 in etwa im Bereich unterhalb des Flaschenhalses berühren.

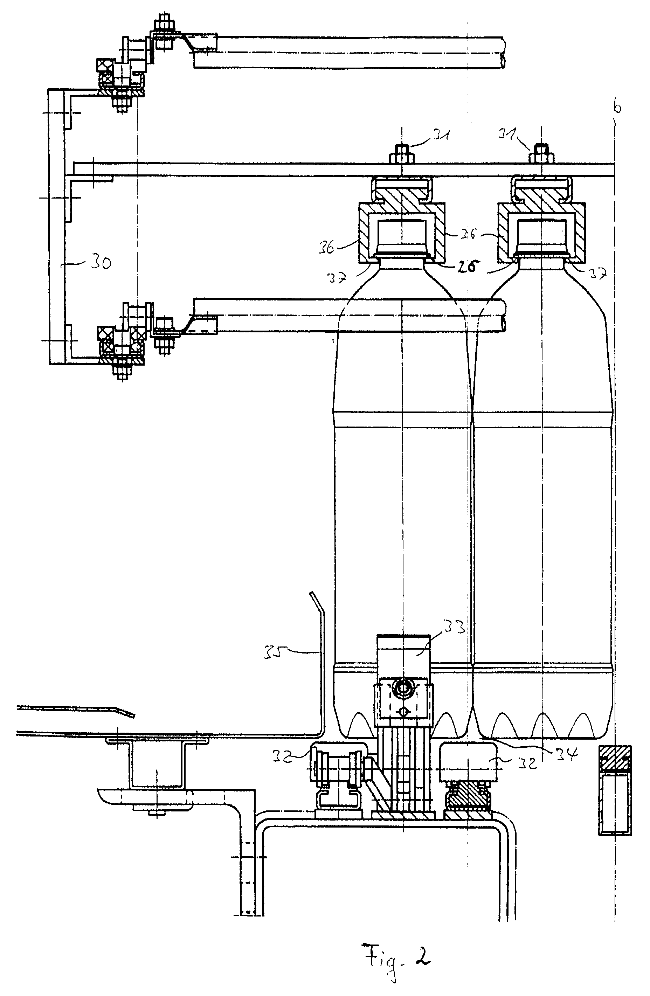

Zwischen den Umlenkpunkten 15 und 16 der Kette 14 sind zwischen den Mitnehmerstäben 20 des Unter- und Obertrums der Kette 14 Führungen 21 angeordnet. Die Anzahl der nebeneinander angeordneten Führungen 21 entspricht der Anzahl der Flaschen 3, die eine quer zur Transportrichtung ausgerichtete Reihe bilden (Fig. 2).

Die Führungen 21 weisen im dargestellten Beispiel sechs Bereiche auf. Der erste Bereich 22 beginnt über dem Zufuhrband 1 und verläuft bis knapp vor dessen Ende horizontal. Der zweite sich anschließende Bereich 23 steigt im spitzen Winkel leicht an. Der dritte sich anschließende Bereich 24 verläuft bis zum Beginn der Faltstation 6 auf dem durch die Steigung definierten Niveau horizontal, um dann im vierten Bereich 25 leicht abzufallen auf eine Höhe derart, daß die Flaschen 3 in Kontakt mit dem Kartonzuschnitt gelangen, der mittels der Transportkette 8 in die Faltstation 6 gefördert worden ist, und die Kragen 26 der Flaschen 3 nicht mehr auf den Führungen 21 aufliegen. Der fünfte Bereich 27 der Führungen 21 verläuft in dieser Höhe horizontal, um dann abermals im Bereich 28 bis zum Ende leicht abzufallen. Das Ende der Führungen 21 befindet sich oberhalb des Bandes 12 in etwa im Bereich des Umlenkpunktes 16, an dem auch der Antrieb der Kette 14 angeordnet sein kann.

Wie sich deutlich aus Fig. 2 ergibt, sind die benachbarten Führungen 21 an mehreren quer über die Transportebene reichenden Traversen 29 befestigt, die ihrerseits an dem die Kette 14 tragenden Rahmen 30 befestigt sind.

Die Befestigung der Führungen 21 an den Traversen erfolgt im vorliegenden Beispiel mittels in Langlöchern seitlich versetzbaren Schrauben 31. Hierdurch ist eine Verstellung des Abstandes zwischen den Führungen 21 möglich.

Die Führungen 21 sind jedoch auch höhenverstellbar, was dadurch bewirkt wird, daß die die Kette 14 und die Traversen 29 tragenden Rahmen 30 vertikal verstellbar ausgebildet sind, so daß mit der Höhenverstellung der Führung 21 gleichzeitig eine entsprechende Höhenverstellung der Mitnehmerstäbe 20 einhergeht.

In der Fig. 2 ist der in Transportrichtung gesehen linke Teil der Einrichtung bis zur Symmetrieachse b dargestellt, und zwar im Bereich der Faltstation 6, was durch Elemente 32 des als Kette ausgebildeten Transportbandes 7 und ein nach oben geklapptes Faltelement 33 angedeutet ist. Nicht dargestellt ist der bei Tray-Verpackung oder Plattenverpackung an sich vorhandene Kartonzuschnitt im Zwischenraum 34 zwischen Transportband 7 und Flaschen 3. In der Zeichnung links davon ist ein Leitblech 35 für ein aufgestelltes Tray-Seitenteil dargestellt.

Die Führungen 21 sind als im Querschnitt U-förmige Profile ausgebildet, wobei die U-Schenkel 36 nach unten zeigen und ihre Enden 37 im rechten Winkel aufeinander zuweisen. Der Abstand der Ebnden 37 voneinander entspricht mit Spiel in etwa dem Flaschenhalsdurchmesser, so daß die Kragen 26 der Flaschen 3 sicher auf diesen Enden 37 aufliegen.

Die von der Abteilstation ankommenden Produktgruppen 2 werden mittels des Zufuhrbandes 1 an den Anfang der Führungen 21 herangeführt, wobei die Flaschenhälse mit Schraubverschluß und dem darunter befindlichen Kragen 26 in das U-Profil der Führungen 21 eintauchen. Im Weiterfahren der Flaschen 3 auf dem Zufuhrband 1 legt sich ein Mitnehmerstab 20 von hinten an die Flaschen 3 der in Transportrichtung hinteren Flaschenreihe, was dadurch geschieht, daß die Geschwindigkeit vₘ des Mitnehmerstabes 20 etwas größer ist als die Transportgeschwindigkeit vₜ des Zufuhrbandes. Der Mitnehmerstab 20 schiebt somit die ganze Produktgruppe 2 in den Führungen zum aufsteigenden Bereich 23 der Führung 21, wodurch die Flaschen den Kontakt zum Boden verlieren. Frei hängend werden sie durch den horizontalen Bereich 24 der Führungen 21 zum Bereich 25 der Führungen 21 geschoben, wo sie im Bereich der Faltstation 6 gemäß einer ersten Alternative uf einen Tray-Zuschnitt abgesetzt werden, wodurch der Kragen von den Führungen 37 abhebt. Das Transportband 7 in der Faltstation hat die gleiche Transportgeschwindigkeit wie der Mitnehmerstab 20. In der Faltstation wird der Tray-Zuschnitt an der Produktgruppe hochgefaltet und verklebt, wobei die gesamte Tray-verpackte Gruppe zum Förderband 9 transport wird und von dort in die Einschlagstation, wo sie - wie oben beschrieben - mit einem Folienabschnitt umhüllt wird.

Eine Alternative hierzu besteht darin, daß die Produktgruppe über den Bereich 25 der Führungen 21 statt auf einen Tray-Zuschnitt auf eine einfache Platte, also einen beispielsweise rechteckigen Kartonzuschnitt aufgesetzt wird, der dann in der Einschlagstation zusammen mit der darauf befindlichen Produktgruppe umwickelt wird.

Eine dritte Alternative besteht darin, daß die Produktgruppe 2 von dem Mitnehmerstab 20 über die Faltstation 6 hinaus befördert wird, ohne daß in dieser Faltstation ein Zuschnitt vorhanden ist. Somit werden die Flaschen weiterhin frei hängend bis zum Bereich 28 der Führungen 21 weitertransportiert, wo sie dann am Ende des Bereiches 28 auf das Förderband 9 aufgesetzt werden und so in die Einschlagstation gelangen, wo die Produktgruppe ohne weitere Verpackungsmaterialien allein durch den Folienabschnitt umwickelt wird. Dabei ist die Transportgeschwindigkeit des Förderbandes 9 ebenfalls genau so groß wie die Geschwindigkeit des Mitnehmerstabes.

## Patentansprüche

1. Einrichtung zum Transportieren von mit einem unterhalb des Verschlusses angeordneten Kragen versehenen, kippgefährdeten Flaschen mit einer Abteilstation, in der mehrere derartige Flaschen zu einem Gebinde zusammengestellt werden, und einer Verpackungsstation, wobei zwischen diesen Stationen am Flaschenhals unterhalb des Kragens anliegende Führungen vorgesehen sind,
dadurch gekennzeichnet,
daß die oberhalb der Transportebene zwischen Abteilstation und Verpackungsstation (5,6) der Anzahl der quer zur Transportrichtung nebeneinander angeordneten Flaschen (3) entsprechende Anzahl von den Kragen (26) der Flaschen (3) untergreifende Führungen (21) in Richtung Verpackungsstation (6) nach anfänglich horizontalem Verlauf einen ansteigenden Bereich (23) aufweisen, der in einen horizontalen Bereich (24) übergeht, der wiederum in einen zur Verpackungsstation (6) abfallenden Bereich (25) übergeht, wodurch die Flaschenböden in Kontakt mit dem dort vorhandenen Verpackungsmaterial gelangen, wobei zur Fortbewegung der Flaschen (3) in den Führungen (21) an mindestens einer endlos umlaufenden Kette (14) quer zur Transportrichtung angeordnete Mitnehmerstäbe (20) vorgesehen sind, die sich am Anfang der Führungen (21) von hinten an die Flaschen (3) anlegen und am Ende der Führungen (21) von diesen nach oben weg bewegbar sind.

2. Einrichtung nach Anspruch 1,
dadurch gekennzeichnet,
daß die Verpackungsstation aus einer Vorrichtung zum Auffalten (6) (Faltstation) eines Kartonzuschnitts (Tray) und/oder aus einer Vorrichtung (5) zum Umhüllen des Gebindes mit einer Folie besteht, wobei die Führungen (21) im Bereich der Faltstation (6) eine Höhe von der Transportebene aufweisen, die kleiner ist als der Abstand zwischen der Unterkante des Kragens (26) der Flasche und dem Flaschenboden.

3. Einrichtung nach Anspruch 1,
dadurch gekennzeichnet,
daß die Verpackungsstation (6) aus einer Vorrichtung zum Unterlegen eines ebenen Kartonzuschnitts (Platte) unter das antransportierte Flaschengebinde (2) und einer Vorrichtung (5) zum Umhüllen des auf dem Kartonabschnitt stehenden Gebindes (2) mit einer Folie besteht.

4. Einrichtung nach einem der Ansprüche 1 bis 3,
dadurch gekennzeichnet,
daß die Geschwindigkeit (vm) der Mitnehmerstäbe (20) größer ist als die Geschwindigkeit (vₜ) der von der Abteilstation ankommenden Flaschen (3) und gleich ist der Transportgeschwindigkeit (vₜ) in der Verpackungsstation (6,5).

5. Einrichtung nach einem der Ansprüche 1 bis 4,
dadurch gekennzeichnet,
daß die Höhe der Führungen (21) über der Transportebene einstellbar ist.

6. Einrichtung nach einem der Ansprüche 1 bis 5,
dadurch gekennzeichnet,
daß der seitliche Abstand der Führungen (21) zueinander verstellbar ist.

7. Einrichtung nach einem der Ansprüche 1 bis 6,
dadurch gekennzeichnet,
daß die Höhenverstellbarkeit der Führungen (21) mit der Höhenverstellbarkeit der Mitnehmerstäbe (20) synchronisiert ist.

8. Einrichtung nach einem der Ansprüche 1 bis 7,
dadurch gekennzeichnet,
daß die Führungen (21) im Querschnitt U-förmig ausgebildet sind, wobei die U-Schenkel (36) nach unten zeigen und ihre Enden (37) im rechten Winkel aufeinander zeigen.
